# FASCICULE DE BREVET EUROPEEN

(11) **EP 2 376 592 B1**
(45) Date de publication et mention de la délivrance du brevet: **02.01.2013**
(21) Numéro de dépôt: 10706695.3
(22) Date de dépôt: 06.01.2010
(51) Int. Cl.: C09K 9/02, G11B 7/249, B82Y 30/00

(54) **MATERIAU COMPOSITE PHOTOCHROME**
FOTOCHROMER VERBUNDWERKSTOFF
PHOTOCHROMIC COMPOSITE MATERIAL

(30) Priorité: 13.01.2009 FR 0900126
(43) Date de publication de la demande: 19.10.2011
(73) Titulaire: Centre National de la Recherche Scientifique CNRS, 75016 Paris (FR)
(72) Inventeur: MALFANT, Isabelle, F-31120 Goyrans (FR); CORMARY, Benoît, F-31450 Montgiscard (FR); VALADE, Lydie, F-31270 Cugnaux (FR)
(74) Mandataire: Derambure, Christian
(86) Numéro de dépôt international: PCT/FR2010/050011
(87) Numéro de publication internationale: WO 2010/081977

(56) Documents cités:
- EP-A- 0 592 366
- WO-A-2006/019435
- US-A- 5 821 287
- LEVY D: "PHOTOCHROMIC SOL-GEL MATERIALS" CHEMISTRY OF MATERIALS, AMERICAN CHEMICAL SOCIETY, WASHINGTON, US, vol. 9, no. 12, 1 décembre 1997 (1997-12-01), pages 2666-2670, XP000729200 ISSN: 0897-4756 cité dans la demande
- SCHANIEL D. ET AL: "Photogeneration of two metastable NO linkage isomers with high populations of up to 76% in trans-[RuCl(py)4(NO)][PF6]2.1/2H2O" PHYSICAL CHEMISTRY CHEMICAL PHYSICS, vol. 9, 2007, pages 3717-3724, XP002542585 cité dans la demande

## Description

L'invention est relative aux matériaux composites photochromes.

De tels matériaux permettent la constitution de média de stockage optique d'information à haute densité.

Un tel média de stockage optique doit présenter un certain nombre de propriétés telles qu'une bonne qualité optique, une épaisseur minimum, des états excités à longue durée de vie, et un changement photoinduit important à savoir une modification importante de l'indice de réfraction, celui-ci étant un paramètre essentiel dans la technique holographique de stockage de l'information. La satisfaction de ces propriétés, en combinaison, est une contrainte limitant les matériaux candidats à une telle fonction de stockage optique (voir J.Ashley, M-P. Bernal, G.W. Burr, H. Coufal, H. Guenther, J.A. Hoffnagle, C.M. Jefferson, B. Marcus, R.M. Macfarlane, R.M. Shelby, G.T. Sincerbox, « Holographic data storage », IBM J. Res. Develop., vol. 44, 2000, 341).

Différents matériaux ont été étudiés en tant que média de stockage optique : matériaux inorganiques synthétisés sous la forme de cristaux de grandes tailles, tels que LiNbO₃ ou BATiO₃, ou polymères composites photoréactifs, notamment le composite associant une molécule chromophore comme la phenantrènequinone (PQ) dans une matrice de méthacrylate de méthyle (PMMA), ou encore un groupement chromophore comme les azobenzènes ou les spiropyranes. Dans de tels cas, les matériaux inorganiques ou les polymères composites photoréactifs sont tels que suite à une excitation lumineuse leurs propriétés optiques, tel que leur indice de réfraction, sont modifiées de façon réversible (G.T. Sincerbox, «Holographic storage: are we there yet », URL: http://www.optics.arizona.edu/Glenn/holograp1.htm).

Des études ont également été réalisées sur des molécules photochromes possédant un groupement chimique nitrosyle, tel le nitroprussiate de sodium Na₂[Fe(CN)₅NO].2H₂O qui présente une isomérisation réversible, à basse température, qui entraîne un changement de couleur et une modification de l'indice de réfraction du composé. Les états photoinduits, métastables, ont une longue durée de vie (supérieure à 347 jours). L'irradiation provoque dans ce type de matériau moléculaire le changement de conformation du ligand nitrosyle. Le changement optique est localisé, la variation de l'indice de réfraction est importante et la vitesse de changement d'état convenable au regard de l'application en cause. Pour autant, ce type de matériau présente un certain nombre de limites : la définition de l'image n'est pas optimale pour la raison que la population générée n'est que partielle, la température de fonctionnement est éloignée de la température ambiante et le matériau se présente sous forme de monocristaux, avec les inconvénients inhérents : fragilité, taille difficilement contrôlable (voir a) P. Gutlich, Y. Garcia, T. Woike, « Photoswitchable coordination compounds », Coord. Chem. Rev., 2001, 839. b) T. Woike, W. Kirchner, G. Schetter, T. Barthel, S. Haussuhl, « New information storage elements on the basis of metastable electronic states », Optics Comm., vol. 106, 1994, 6. c) M. Imlau, M. Fally, T. Weisemoeller, D. Schaniel, « Holographic light scattering in centrosymmetric sodium nitroprusside upon generation of light-induced metastables states », Phys. Rev. B, vol. 73, 2006,205113).

D. Schaniel, B. Cormary, I. Malfant, L. Valade, T. Woike, B. Delley, K.W. Kramer, H.U. Gudel, « Photogeneration of two metastable NO linkage isomers with high populations of up to 76% in trans-[RuCl(NO)(py)4][PF6]2.½H2O », Phys. Chem. Chem. Phys., vol. 9, 2007, 3717, décrit le complexe [RuCl(NO)(py)₄][PF₆]_{2.}½H₂O, lequel présente des propriétés analogues à celles précédemment décrites, mais avec une efficacité accrue. Avec ce complexe de ruthénium photochrome à ligand nitrosyle, la propriété de commutation engendrée par la formation des états métastables est liée au changement de conformation du ligand nitrosyle dans le complexe. Ce changement structural est accompagné d'une modification importante de l'indice de réfraction. Comme témoins d'efficacité accrue, on peut indiquer, par exemple, que la conversion de l'état fondamental vers l'état métastable est presque totale lorsque le complexe est sous forme de cristal et que la température de fonctionnement plus élevée que précédemment. Il reste toutefois à intégrer un tel complexe, sous forme de cristaux ou de poudre, dans un dispositif industriel de forme appropriée. Dans le cas d'espèce considéré, cette question n'a pas trouvé aujourd'hui de solution satisfaisante. C'est précisément l'un des problèmes auquel l'invention apporte une solution.

Trois types d'approches ont été généralement proposés pour la mise en forme des différents composés photochromes connus.

La première approche consiste en l'insertion et la dilution des molécules photochromes organiques (diaryléthène, spiropyrane par exemple) dans une matrice polymère, le polymère étant condensé. Parmi les polymères utilisés, on peut citer le polyvinylacool (PVA), le polyvinylpyridine (PVP), le polyméthacrylate de méthyle (PMMA). Les molécules photochromes sont alors dispersées sous forme de nanoparticules à l'intérieur de la matrice polymère. Cette première approche permet l'écriture et la lecture d'informations avec une grande précision. La densité de stockage peut être importante et la résolution élevée. En revanche, cette première approche a pour limite la faiblesse de la stabilité thermique, la faiblesse de l'épaisseur possible pour permettre un stockage optique tridimensionnel, l'existence de fortes variations des propriétés optiques en fonction de la température, le vieillissement, voire même la détérioration du média au fil des cycles écriture/lecture/effacement. Par conséquent, cette première approche ne permet pas d'optimiser la quantité d'information stockée et la qualité et la précision du stockage diminuent avec le temps.

La deuxième approche, pour des matériaux inorganiques tels que LiNbO₃ ou BATiO₃ ou des molécules photochromes possédant un groupement chimique nitrosyle, tel le Na₂[Fe(CN)₅NO], consiste en la réalisation de monocristaux. Les qualités optiques obtenues sont excellentes mais cette approche a pour inconvénient une reproductibilité de production limitée, une réelle fragilité mécanique, les cristaux étant cassants, et une grande difficulté de contrôle de la forme réalisée. Pour ces raisons, cette approche est peu compatible à l'échelle industrielle.

D. Levy, « Photochromic Sol-Gel materials », Chem. Master., vol.9, 1997, 2666 enseigne une troisième approche, à savoir l'insertion de molécules photochromes dans une matrice de silice par un procédé sol-gel (hydrolyse, condensation et séchage). On utilise comme précurseur un alkoxysilane (tel que le tétraméthoxyorthosilane - TMOS -, le vinyltriéthoxysilane - VTES -, ou le tétraéthoxyorthosilane - TEOS -). Par la réaction sol-gel en solution aqueuse l'alkoxysilane se condense et en présence de molécules photochromes (telles que les spiropyranes), on obtient un matériau composite. La matrice de silice formée présente des pores de tailles nanométriques variables en fonction du pH du milieu réactionnel. Les molécules photochromes sont piégées dans ces pores. On peut, par cette troisième approche, réaliser des plaques ou des monolithes de forme voulue. Cette troisième approche a notamment pour avantages, outre la maîtrise de la forme réalisée et la possibilité de réaliser des formes d'épaisseur suffisante, la conservation des propriétés optiques des molécules photochromes insérées, la stabilité thermique et la faible variation de l'indice de réfraction de la matrice en fonction de la température. En revanche, cette troisième approche a pour limite, constatée jusqu'à présent, l'existence d'interactions gênantes entre les molécules photochromes insérées et la matrice de silice à pores nuisant à l'efficacité finale. D'autre part, les conditions opératoires des étapes du procédé sol-gel doivent être maitrisées si l'on veut pouvoir obtenir un média composite de qualité.

Le document WO 2006/019435 décrit des procédés de fabrication de microparticules photosensibles et des compositions aqueuses les comprenant. Le document US 5821287 se réfère à la synthèse de composés photochromiques. Le document EP-A-0592366 se réfère à des composés photochromiques.

Le problème à la base de l'invention consiste, par conséquent, à réaliser un matériau composite photochrome pour le stockage optique d'information à haute densité, qui, à la fois, soit de forme et de taille maîtrisables, ainsi que résistant, puisse être suffisamment épais, soit transparent, et dont la mise en forme n'affecte pas négativement les propriétés de commutation du monocristal, c'est-à-dire un taux de conversion de l'ordre de 100%. En outre, il s'agit que le procédé de réalisation d'un tel matériau composite photochrome soit peu coûteux en énergie (tel que typiquement réalisé à température et pression ambiantes) et présente le minimum d'effets nocifs sur l'environnement (tel que typiquement en évitant l'emploi de solvants nocifs au profit de l'eau). Il s'agit également que le procédé soit reproductible et envisageable à l'échelle industrielle.

A cet effet, l'invention vise à combiner les qualités constatées à titre expérimental chez le complexe de ruthénium photochrome à ligand nitrosyle [RuCl(NO)(py)₄][PF₆]_{2.}½H₂O décrit dans D. Schaniel, B. Cormary, I. Malfant, L. Valade, T. Woike, B. Delley, K.W. Kramer, H.U. Gudel, « Photogeneration of two metastable NO linkage isomers with high populations of up to 76% in trans-[RuCl(NO)(py)4][PF6]2.½H2O», Phys. Chem. Chem. Phys., vol. 9, 2007, 3717 (commutation complète à l'état solide), aux avantages procurés par la troisième approche de mise en forme précédemment mentionnée (insertion de molécules photochromes dans une matrice de silice par un procédé sol-gel).

L'invention est remarquable par le fait que les qualités qu'offrent les complexes de ruthénium photochrome à ligand nitrosyle sont, de façon surprenante, préservées par la mise en forme dans une matrice de silice par le procédé sol-gel.

A cet effet, et selon un premiers aspect, l'invention vise un procédé sol-gel de production d'un matériau composite photochrome, dans lequel :
- on dispose d'un précurseur,
- on dispose d'un complexe photochrome,
- on met en oeuvre un procédé sol-gel à partir du précurseur et du complexe photochrome, moyennant des étapes successives d'hydrolyse, de condensation, et de séchage,
caractérisé par le fait que :
- on sélectionne comme précurseur un alkoxysilane,
- on sélectionne comme complexe photochrome un complexe de ruthénium à ligand nitrosyle, et, en combinaison,
- on met en oeuvre le procédé sol-gel à partir du précurseur et du complexe photochrome sélectionnés, moyennant des étapes successives d'hydrolyse, de disposition dans un contenant de forme choisie, de condensation (ou polymérisation ou gélification), de maturation et de vieillissement, cette dernière étape incluant un séchage final, et,
- pour les étapes de maturation et de vieillissement, on sélectionne le pH, la température et la durée pour que dans le xérogel réalisé, dont la forme est déterminée par celle du contenant, le complexe photochrome de ruthénium à ligand nitrosyle, à l'état cristallin et sous forme de nanoparticules, est inséré dans les nanopores de la matrice de silice répartis de façon au moins substantiellement homogène.

Selon d'autres caractéristiques du procédé:
- on sélectionne le précurseur dans le groupe comprenant le tétraméthoxyorthosilane - TMOS -, le vinyltriéthoxysilane - VTES -, le tétraéthoxyorthosilane - TEOS -, ou des alkoxydes M(OR)x, où M est un métal et R un groupement alkyle;
- on sélectionne le complexe photochrome dans le groupe comprenant le [RuCl(NO)(py)₄][PF₆]_{2.}½H₂O et [RuY(NO)(py)₄]X₂ dans lequel Y est CI, Br, OH et X est choisi dans la famille comprenant Br, Cl, PF₆, BF₄ ;
- pour les étapes de maturation et vieillissement, on sélectionne un pH acide (<7);
- en présence d'acétonitrile, l'étape de maturation dure de l'ordre d'une semaine à une température de l'ordre de 55°C, en atmosphère fermée, alors qu'en présence d'eau, l'étape de maturation dure de l'ordre de 72 heures à température ambiante ;
- l'étape de vieillissement dure de l'ordre d'une semaine à une température de l'ordre de 55°C.

Ce procédé est peu coûteux en énergie parce qu'il peut être réalisé à température et pression ambiantes. Il présente le minimum d'effets nocifs sur l'environnement, pour la raison qu'il permet d'éviter l'emploi de solvants nocifs au profit de l'eau.

Ce procédé est enfin reproductible et envisageable à l'échelle industrielle.

Selon un deuxième aspect, l'invention vise le matériau composite photochrome obtenu par le procédé qui vient d'être décrit.

Selon d'autres caractéristiques de ce matériau composite photochrome, le xérogel réalisé est de forme déterminée par celle du contenant et comprend le complexe photochrome de ruthénium à ligand nitrosyle sélectionné, à l'état cristallin et sous forme de nanoparticules, inséré dans les nanopores de la matrice de silice répartis de façon au moins substantiellement homogène.

Selon d'autres caractéristiques :
- le matériau se présente sous la forme d'un monolithe ou sous la forme de plaque d'épaisseur souhaitée ;
- la taille moyenne des nanopores de la matrice de silice est comprise entre 2 et 15 nm ;
- les particules les plus nombreuses des nanocristaux de complexe photochrome sont comprises entre 2 et 4nm.

Ce matériau composite photochrome est, à la fois, de forme et de taille maîtrisables, résistant, suffisamment épais lorsque cela est souhaité pour des capacités de stockage importantes, et transparent.

Enfin, la mise en forme de ce matériau par le procédé sol-gel avec matrice de silice n'affecte pas négativement les propriétés de commutation existant sur le monocristal du complexe de ruthénium, à savoir un taux de conversion de l'ordre de 100%.

Selon un troisième aspect, l'invention vise un média à mémoire optique de haute capacité comprenant au moins un matériau composite photochrome tel qu'il vient d'être décrit.

Un tel média offre des qualités de stockage optique, notamment capacité, nettement supérieures à ce qui était proposé jusqu'à présent.

Selon d'autres caractéristiques de ce média à mémoire optique :
- sa population photoinduite est proche de celle de monocristaux du complexe photochrome ;
- sa température de mise en oeuvre proche de la température ambiante ;
- il présente un changement réversible complet de couleur après irradiation ;
- ses états métastables ont une durée de vie supérieure à 9 ans.

L'invention sera bien comprise à la lecture de la description qui suivra de plusieurs modes de réalisation.

Comme indiqué précédemment, l'invention a trois aspects :
- un procédé sol-gel de production d'un matériau composite photochrome,
- un tel matériau composite photochrome, caractérisé en ce qu'il est obtenu par ce procédé, et
- un média à mémoire optique de haute qualité, notamment capacité, comprenant au moins un tel matériau composite photochrome.

Le procédé de production d'un matériau composite photochrome selon l'invention met en oeuvre la méthode (ou la réaction) connue sous le nom de « sol-gel ».

Les principes de celle-ci sont connus ou aisément à la portée de l'homme du métier. On peut se rapporter en particulier au document D. Levy, « Photochromic Sol-Gel materials », Chem. Master., vol.9, 1997, 2666.

On sait que la méthode sol-gel comporte les étapes successives suivantes:
- Hydrolyse,
- Condensation ou, autrement désignée, polymérisation ou gélification,
- Séchage.

Dans le procédé de production d'un matériau composite photochrome selon l'invention, on sélectionne comme précurseur un alkoxysilane et on dispose de ce précurseur.

D'autre part, on sélectionne comme complexe photochrome un complexe de ruthénium à ligand nitrosyle et on dispose de ce complexe.

Dans une réalisation, on met en oeuvre, comme précurseur, le tétraméthoxyorthosilane - TMOS -.

Dans d'autres réalisations possibles, on met en oeuvre comme précurseur le vinyltriéthoxysilane - VTES -, voire le tétraéthoxyorthosilane - TEOS -, ou fonctionnellement équivalent, plus généralement des alkoxydes M(OR)x, où M est un métal et R un groupement alkyle.

Dans une réalisation, on met en oeuvre comme complexe photochrome le [RuCl(NO)(py)₄][PF₆]_{2.}½H₂O.

Dans une autre réalisation possible, on met en oeuvre comme complexe photochrome le [RuY(NO)(py)₄]X₂ dans lequel Y = Br, OH avec X = Br, CI, PF₆, BF₄ et Y = CI avec X = Br, CI, BF₄ ou fonctionnellement équivalent.

Selon l'invention, on met en oeuvre le procédé sol-gel à partir du précurseur et du complexe photochrome sélectionnés, moyennant des étapes successives d'hydrolyse, de disposition dans un contenant de forme choisie, de condensation (ou polymérisation ou gélification), de maturation et de vieillissement, cette dernière étape incluant un séchage final.

De plus, pour les étapes de maturation et de vieillissement, on sélectionne le pH, la température et la durée pour que dans le xérogel réalisé, dont la forme est déterminée par celle du contenant, le complexe photochrome de ruthénium à ligand nitrosyle, à l'état cristallin et sous forme de nanoparticules, est inséré dans les nanopores de la matrice de silice répartis de façon au moins substantiellement homogène.

Les étapes opératoires sont réalisées à température et pression douces, voisines de l'ambiante.

Dans l'étape d'hydrolyse de l'alkoxyde, l'hydrolyse de l'alkoxyde peut être totale si les proportions en eau, le pH et la température sont sélectionnés à cette fin. L'ensemble des groupements OR est alors remplacé par des groupements OH.

Pour réaliser cette étape, on mélange l'alkoxyde avec du méthanol et on agite ce mélange pendant le temps nécessaire, par exemple de l'ordre de 5 minutes. On commence l'hydrolyse par addition d'eau distillée.

Après un certain temps, par exemple de l'ordre de 2 minutes, on ajoute au précurseur le complexe photochrome sélectionné, lui-même en solution.

On poursuit l'agitation le temps nécessaire, par exemple de l'ordre de 10 minutes.

Dans une réalisation, les proportions sont de 1 ml de tétraméthoxyorthosilane (TMOS) et 1,2 ml de méthanol et le double, soit 2,4 ml d'eau distillée.

On met en oeuvre le complexe photochrome tel que sélectionné dans une solution d'acétonitrile dans le cas du [RuCl(NO)(py)₄][PF₆]_{2.}½H₂O, ce complexe n'étant pas soluble dans l'eau, ou dans de l'eau dans le cas du [RuCl(NO)(py)₄]X₂, avec X= CI, Br.

Puis, après l'étape d'hydrolyse, on dispose le précurseur tel que sélectionné et le complexe photochrome tel que sélectionné, et en solution, dans un contenant de forme choisie, lequel conditionne la forme du xérogel qui sera réalisé, monolithe ou plaque.

Par exemple, on peut utiliser un contenant tel qu'un tube à hémolyse pour former un monolithe et un contenant tel qu'une boîte à fond plat pour former une plaque d'épaisseur souhaitée.

L'étape de condensation (ou polymérisation ou gélification) conduit à la formation d'oxygène pontant avec l'élimination de molécule d'eau ou d'alcool. A la fin de cette étape, les atomes d'oxygène pontants permettent la formation d'un réseau de silice tridimensionnel qui est obtenu selon la réaction bilan suivante:

≡ Si-OH + Si-OH ⇆ ≡ Si-O-Si ≡ + H₂O

≡ Si-OR + Si-OH ⇆ ≡ Si-O-Si ≡ + ROH.

L'étape de condensation conduit à la réalisation d'un gel.

Lorsque l'on met en oeuvre, comme complexe photochrome, le [RuCl(NO)(py)₄][PF₆]_{2.}½H₂O, et que le précurseur tel que le TMOS est dans un mélange contenant de l'acétonitrile, la condensation est plus longue et l'apparition du gel humide n'intervient que plus tard. Si l'étape de maturation ultérieure est trop rapide ou effectuée en atmosphère ouverte, il se peut que le gel obtenu ne soit pas homogène et des microcristaux de complexe photochrome dispersés dans la matrice.

Par les étapes de maturation puis de vieillissement, ce gel est stabilisé : la polymérisation commencée précédemment se poursuit, tandis que le solvant se trouvant à l'intérieur du gel est chassé.

Pour ces étapes de maturation et de vieillissement, on sélectionne le pH, la température et la durée pour que dans le xérogel finalement réalisé, dont la forme est déterminée par le contenant, le complexe photochrome, à l'état cristallin et sous forme de nanoparticules, est inséré dans les nanopores de la matrice de silice répartis de façon au moins substantiellement homogène.

Ainsi, dans une réalisation, le pH sélectionné est de l'ordre de 5 dans le cas du complexe photochrome [RuCl(NO)(py)₄][PF₆]_{2.}½H₂O, et de l'ordre de 5,6 dans le cas du [RuCl(NO)(py)₄]Br₂.

Dans une réalisation, l'étape de maturation dure dans le premier cas de l'ordre d'une semaine à une température de l'ordre de 55°C, en atmosphère fermée, du fait de la présence de l'acétonitrile. Dans le second cas, l'étape de maturation dure de l'ordre de 72 heures à température ambiante.

Dans une réalisation, l'étape de vieillissement dure dans le premier cas et dans le second cas de l'ordre d'une semaine à une température de l'ordre de 55°C.

La fin de l'étape de vieillissement permet un séchage par lequel on densifie le gel de silice et on élimine le reste du solvant.

Le séchage par évaporation lente provoque une contraction du réseau de silice qui peut réduire le volume du gel (par exemple une perte de volume de 1/5) et conduire à la formation d'un xérogel, sous forme de monolithe ou de plaque. Au contraire, si le séchage intervient dans des conditions dures, au-delà du point critique du solvant, le gel humide se contracte très peu et on obtient non un xérogel comme souhaité, mais un aérogel.

Si les étapes de maturation et vieillissement sont trop rapides, il peut se produire des fissures ou fractures non souhaitées dans le matériau réalisé.

Lorsque l'on met en oeuvre un mélange eau/méthanol (sans acétonitrile), plus la concentration en complexe photochrome est élevée, plus la couleur du gel est intense. Au contraire, lorsque l'on met en oeuvre un mélange eau/méthanol/acétonitrile, lorsque la concentration en complexe photochrome dépasse 30 mmol.L⁻¹, la matrice est saturée par le complexe et des cristaux et de la poudre se forment à l'intérieur et autour du xérogel.

Selon l'invention - et comme cela a été illustré précédemment -, pour les étapes de maturation et de vieillissement, on sélectionne le pH, la température et la durée pour que dans le xérogel réalisé, dont la forme est déterminée par le contenant, le complexe photochrome soit à l'état cristallin et sous forme de nanoparticules et inséré dans les nanopores de la matrice de silice, eux-mêmes répartis de façon au moins substantiellement homogène.

Avec le procédé tel qu'il vient d'être décrit, on obtient des matériaux composites photochromes qui sont homogènes, transparents, facilement modelables, stables aux conditions normales de température et pression. Ainsi, il a été constaté que les xérogels ne montrent pas de détérioration après quatre mois et même jusqu'à sept mois. Ces matériaux présentent une excellente résistance au rayonnement laser, une résistance mécanique analogue à celle du verre, une bonne résistance aux solvants.

Comme déjà indiqué, on peut réaliser des matériaux composites photochromes en forme de monolithe de 1 à 2 cm de longueur ou en forme de plaque de 1 à 3 cm² et d'épaisseur souhaitée.

La taille moyenne des nanopores de la matrice de silice réalisée sans catalyse acide ou basique est comprise entre 2 et 15 nm. Leur répartition est homogène.

Les complexes photochromes se présentent sous forme de nanocristaux. Les particules comprises entre 2 et 4nm sont les plus nombreuses.

Compte tenu des tailles et des distances intermoléculaires en jeu, il est avéré que les plus petits nanopores de la matrice de silice contiennent une ou deux molécules de ruthénium avec ses contre-ions.

Les analyses réalisées sur les matériaux composites obtenus lors des essais ont montré que les particules sont bien diluées dans la matrice et que les objets de taille nanométrique se trouvant dans les nanopores sont bien constitués par le complexe photochrome.

On met en évidence le photochromisme des matériaux composites obtenus, comme suit, dans la cas d'une matrice de silice à laquelle est associé un complexe photochrome [RuCl(NO)(py)₄][PF₆]_{2.}½H₂O.

On place un échantillon de ce matériau dans un cryostat puis on l'irradie pendant 2 heures à une température de l'ordre de 100 K. On sort l'échantillon du cryostat le plus rapidement possible. On constate un changement de couleur de l'échantillon qui passe de la couleur orange - couleur à l'état fondamental - à la couleur verte - couleur à l'état irradié.

Lorsque l'échantillon est sorti du cryostat, la remontée en température est très rapide et la relaxation commence après seulement 1 minute. Après quelques minutes, l'échantillon est revenu à sa couleur orange.

Ainsi, les matériaux composites photochromes réalisés ont pour caractéristique un changement réversible complet de leur couleur après irradiation. Une estimation de la population photoinduite - de l'ordre de 36% - montre qu'elle est proche de celle observée sur des monocristaux. Ces matériaux composites photochromes peuvent être mis en oeuvre à des températures proches de la température ambiante. Quant aux états métastables, leur durée de vie est supérieure à 9 ans.

Ces matériaux composites photochromes sont donc parfaitement bien adaptés à la constitution de média à mémoire optique de haute qualité, notamment en ce qui concerne la capacité.

## Revendications

1. Procédé sol-gel de production d'un matériau composite photochrome, dans lequel :
- on dispose d'un précurseur,
- on dispose d'un complexe photochrome,
- on met en oeuvre un procédé sol-gel à partir du précurseur et du complexe photochrome, moyennant des étapes successives d'hydrolyse, de condensation, et de séchage,
**caractérisé par le fait que** :
- on sélectionne comme précurseur un alkoxysilane,
- on sélectionne comme complexe photochrome un complexe de ruthénium à ligand nitrosyle, et, en combinaison,
- on met en oeuvre le procédé sol-gel à partir du précurseur et du complexe photochrome sélectionnés, moyennant des étapes successives d'hydrolyse, de disposition dans un contenant de forme choisie, de condensation (ou polymérisation ou gélification), de maturation et de vieillissement, cette dernière étape incluant un séchage final, et,
- pour les étapes de maturation et de vieillissement, on sélectionne le pH, la température et la durée pour que dans le xérogel réalisé, dont la forme est déterminée par celle du contenant, le complexe photochrome de ruthénium à ligand nitrosyle, à l'état cristallin et sous forme de nanoparticules, est inséré dans les nanopores de la matrice de silice répartis de façon au moins substantiellement homogène.

2. Procédé selon la revendication 1, **caractérisé par le fait que** l'on sélectionne le précurseur dans le groupe comprenant le tétraméthoxyorthosilane - TMOS -, le vinyltriéthoxysilane - VTES -, le tétraéthoxyorthosilane - TEOS -, ou des alkoxydes M(OR)x, où M est un métal et R un groupement alkyle.

3. Procédé selon l'une quelconque des revendications 1 et 2, **caractérisé par le fait que** l'on sélectionne le complexe photochrome dans le groupe comprenant le [RuCl(NO)(py)₄][PF₆]_{2.}½H₂O et [RuY(NO)(py)₄]X₂ dans lequel Y est Cl, Br, OH et X est choisi dans la famille comprenant Br, CI, PF₆, BF₄.

4. Procédé selon l'une quelconque des revendications 1 à 3, **caractérisé par le fait que** les étapes opératoires sont réalisées à température et pression douces, voisines de l'ambiante.

5. Procédé selon l'une quelconque des revendications 1 à 4, **caractérisé par le fait qu'**on réalise une hydrolyse totale de l'alkoxyde, l'ensemble des groupements OR étant remplacé par des groupements OH.

6. Procédé selon l'une quelconque des revendications 1 à 5, **caractérisé par le fait qu'**on mélange l'alkoxyde avec du méthanol et on agite le mélange.

7. Procédé selon l'une quelconque des revendications 1 à 6, **caractérisé par le fait qu'**après le début de l'étape d'hydrolyse on ajoute au précurseur le complexe photochrome sélectionné, lui-même en solution.

8. Procédé selon l'une quelconque des revendications 1 à 7, **caractérisé par le fait qu'**on met en oeuvre le complexe photochrome sélectionné en solution dans de l'eau ou, par impossible, dans de l'acétonitrile.

9. Procédé selon l'une quelconque des revendications 1 à 8, **caractérisé par le fait qu'**on met en oeuvre un contenant en forme de tube ou de boîte à fond plat, selon que l'on veut réaliser un monolithe ou une plaque.

10. Procédé selon l'une quelconque des revendications 1 à 9, **caractérisé par le fait que** pour les étapes de maturation et vieillissement, on sélectionne un pH acide (<7).

11. Procédé selon l'une quelconque des revendications 1 à 10, **caractérisé par le fait qu'**en présence d'acétonitrile, l'étape de maturation dure de l'ordre d'une semaine à une température de l'ordre de 55°C, en atmosphère fermée.

12. Procédé selon l'une quelconque des revendications 1 à 10, **caractérisé par le fait qu'**en présence d'eau, l'étape de maturation dure de l'ordre de 72 heures à température ambiante.

13. Procédé selon l'une quelconque des revendications 1 à 12, **caractérisé par le fait que** l'étape de vieillissement dure de l'ordre d'une semaine à une température de l'ordre de 55°C.

14. Matériau composite photochrome réalisé par le procédé selon l'une quelconque des revendications 1 à 13, **caractérisé en ce que** le xérogel réalisé est de forme déterminée par celle du contenant et comprend le complexe photochrome de ruthénium à ligand nitrosyle sélectionné, à l'état cristallin et sous forme de nanoparticules, inséré dans les nanopores de la matrice de silice répartis de façon au moins substantiellement homogène.

15. Matériau composite photochrome selon la revendication 14, **caractérisé par le fait qu'**il se présente sous la forme d'un monolithe ou sous la forme de plaque d'épaisseur souhaitée.

16. Matériau composite photochrome selon l'une quelconque des revendications 14 et 15, **caractérisé par** une taille moyenne des nanopores de la matrice de silice comprise entre 2 et 15 nm.

17. Matériau composite photochrome selon l'une quelconque des revendications 14 à 16, **caractérisé par** des nanocristaux de complexe photochrome dont les particules les plus nombreuses sont comprises entre 2 et 4nm.

18. Média à mémoire optique de haute qualité, notamment capacité, comprenant au moins un matériau composite photochrome selon l'une quelconque des revendications 14 à 17, **caractérisé par** une population photoinduite proche de celle de monocristaux du complexe photochrome.

19. Média à mémoire optique selon la revendication 18, **caractérisé par** une température de mise en oeuvre proche de la température ambiante.

20. Média à mémoire optique selon l'une quelconque des revendications 18 et 19, **caractérisé par** un changement réversible complet de couleur après irradiation.

21. Média à mémoire optique selon l'une quelconque des revendications 18 à 20, **caractérisé par** des états métastables de durée de vie est supérieure à 9 ans.

## Claims

1. A sol-gel method for the production of a photochromic composite material, wherein:
- a precursor is provided,
- a photochromic complex is provided,
- a sol-gel method is implemented starting from the precursor and the photochromic complex, with successive steps of hydrolysis, condensation, and drying,
**characterized by** the fact that:
- an alkoxysilane is selected as a precursor,
- a ruthenium complex with a nitrosyl ligand is selected as a photochromic complex, and, in combination,
- the sol-gel method is implemented starting from the selected precursor and photochromic complex, with successive steps of hydrolysis, arrangement in a container of a selected shape, condensation (or polymerization or gelling), curing and aging, whereby this latter step includes a final drying cycle, and
- for the steps of curing and aging, the pH, the temperature and the duration are selected so that in the xerogel produced, the shape of which is determined by that of the container, the photochromic ruthenium complex with a nitrosyl ligand, in the crystalline state and in the form of nanoparticles, is inserted into the nanopores of the silica matrix, distributed in an at least substantially homogeneous way.

2. A method according to claim 1, **characterized in that** the precursor is selected from the group comprising tetramethoxyorthosilane-TMOS-, vinyltriethoxysilane-VTES-, tetraethoxyorthosilane-TEOS-, or alkoxides M(OR)x, where M is a metal and R is an alkyl group.

3. A method according to any one of claims 1 and 2, **characterized in that** the photochromic complex is selected from the group comprising [RuCl(NO)(py)₄][PF₆]₂.½H₂O and [RuY(NO) (py)₄]X₂, wherein Y is Cl, Br, or OH, and X is selected from the family comprising Br, Cl, PF₆ and BF₄.

4. A method according to any one of claims 1 to 3, **characterized in that** the operating steps are executed at mild temperature and pressure, close to ambient.

5. A method according to any one of claims 1 to 4, wherein total hydrolysis of alkoxide is executed, with OH groups being substituted for all the OR groups.

6. A method according to any one of claims 1 to 5, **characterized in that** the alkoxide is mixed with methanol, and the mixture is stirred.

7. A method according to any one of claims 1 to 6, **characterized in that** after the beginning of the step of hydrolysis, the selected photochromic complex, itself in solution, is added to the precursor.

8. A method according to any one of claims 1 to 7, **characterized in that** the selected photochromic complex in solution is used in water or, if this is impossible, in acetonitrile.

9. A method according to any one of claims 1 to 8, **characterized in that** a container in the form of a tube or a flat-bottomed box is used, depending on whether it is desired to produce a monolith or a plate.

10. A method according to any one of claims 1 to 9, wherein an acidic pH (<7) is selected for the steps of curing and aging.

11. A method according to any one of claims 1 to 10, **characterized in that** in the presence of acetonitrile, the step of curing lasts approximately one week at a temperature of approximately 55°C., in a closed atmosphere.

12. A method according to any one of claims 1 to 10, **characterized in that** in the presence of water, the step of curing lasts approximately 72 hours at ambient temperature.

13. A method according to any one of claims 1 to 12, **characterized in that** the step of aging lasts approximately one week at a temperature of approximately 55°C.

14. A photochromic composite material produced by the method according to any one of claims 1 to 13, **characterized in that** the xerogel produced has a shape that is determined by that of the container and comprises the selected photochromic ruthenium complex with a nitrosyl ligand, in the crystalline state and in the form of nanoparticles, inserted into the nanopores of the silica matrix, distributed in an at least substantially homogeneous way.

15. A photochromic composite material according to claim 14, **characterized in that** it comes in the shape of a monolith or in the shape of a plate of the desired thickness.

16. A photochromic composite material according to any one of claims 14 and 15, **characterized by** an average size of the nanopores of the silica matrix between 2 and 15nm.

17. A photochromic composite material according to any one of claims 14 to 16, **characterized by** photochromic complex nanocrystals the most numerous particles of which are between 2 and 4nm.

18. A high-quality optical memory medium, in particular capacity, comprising at least one photochromic composite material according to any one of claims 14 to 17, **characterized by** a photo-induced population close to that of monocrystals of the photochromic complex.

19. An optical memory medium according to claim 18, **characterized by** a temperature of use close to ambient temperature.

20. An optical memory medium according to any one of claims 18 and 19, **characterized by** a complete reversible change of color after irradiation.

21. An optical memory medium according to any one of claims 18 to 20, **characterized by** metastable states the service life of which exceeds 9 years.

## Patentansprüche

1. Boden-Gel-Verfahren zur Herstellung eines Photochrom-Verbundmaterials, bei dem:
man über einen Vorläufer verfügt,
man über einen Photochromkomplex verfügt,
man ein Boden-Gel-Verfahren ausgehend von dem Vorläufer und dem Photochromkomplex mittels der aufeinanderfolgenden Hydrolyse-, Kondensations- und Trockenstufen umsetzt,
**gekennzeichnet durch** die Tatsache, dass:
man als Vorläufer ein Alkoxysilan auswählt,
man als Photochromkomplex einen Rutheniumkomplex mit Nitrosylligand auswählt und in Kombination
man das Boden-Gel-Verfahren ausgehend von dem ausgewählten Vorläufer und dem ausgewählten Photochromkomplex mittels der aufeinanderfolgenden Hydrolysestufe, der Anordnungsstufe in einem Behälter einer gewählten Form, der Kondensationsstufe (oder Polymerisations- oder Gelbildungsstufe), der Reifungs- und der Alterungsstufe umsetzt, wobei die letztere Stufe ein endgültiges Trocknen umfasst, und
man bei den Reifungs- und Alterungsstufen den ph-Wert, die Temperatur und die Dauer auswählt, damit in dem realisierten Xerogel, dessen Form von der des Behälters bestimmt wird, der Ruthenium-Photochromkomplex mit Nitrosylligand im kristallinen Zustand und in Form von Nanopartikeln in den Nanoporen der Siliziummatrix eingefügt ist, die derart wenigstens im Wesentlichen homogen verteilt sind.

2. Verfahren gemäß Anspruch 1, **gekennzeichnet durch** die Tatsache, dass man den Vorläufer in der Gruppe auswählt, die das Tetramethoxyortholisalan - TMOS -, das Vinyltriethoxysilan - VTES -, das Tetraethoxyorthosilan - TEOS - oder Alkoxyde M(OR)x umfasst, wobei M ein Metall und R eine Alkylgruppe ist.

3. Verfahren gemäß Anspruch 1 und 2, **gekennzeichnet durch** die Tatsache, dass man den Photochromkomplex in der Gruppe auswählt, die das [RuCl(NO)py)₄] [PF₆]₂ 1/2H₂O und [RuY(NO)(py)₄]X₂ umfasst, bei dem Y Cl, Br, OH ist und X in der Familie ausgewählt ist, die Br, Cl, PF₆, BF₄ umfasst.

4. Verfahren gemäß Anspruch 1 bis 3, **gekennzeichnet durch** die Tatsache, dass die operativen Stufen bei leichten Temperaturen und Drücken realisiert werden, die nahe den Raumtemperaturen und -drücken liegen.

5. Verfahren gemäß Anspruch 1 bis 4, **gekennzeichnet durch** die Tatsache, dass man eine totale Hydrolyse des Alkoxyds realisiert, wobei die Struktur der Gruppen OR **durch** Gruppen OH ersetzt wird.

6. Verfahren gemäß Anspruch 1 bis 5, **gekennzeichnet durch** die Tatsache, dass man das Alkoxyd mit dem Methanol mischt und man die Mischung schüttelt.

7. Verfahren gemäß Anspruch 1 bis 6, **gekennzeichnet durch** die Tatsache, dass man nach dem Beginn der Hydrolysestufe dem Vorläufer den ausgewählten Photochromkomplex hinzufügt, der sich seinerseits in Lösung befindet.

8. Verfahren gemäß Anspruch 1 bis 7, **gekennzeichnet durch** die Tatsache, dass man den ausgewählten Photochromkomplex in Lösung in Wasser oder, falls unmöglich, in Acetronitril bringt.

9. Verfahren gemäß Anspruch 1 bis 8, **gekennzeichnet durch** die Tatsache, dass man einen Behälter in Röhrenform oder als Schale mit flachem Boden umsetzt, je nachdem, ob man ein Monolith oder eine Platte realisieren möchte.

10. Verfahren gemäß Anspruch 1 bis 9, **gekennzeichnet durch** die Tatsache, dass man für die Reifungs- und Alterungsstufen einen sauren ph-Wert (<7) auswählt.

11. Verfahren gemäß Anspruch 1 bis 10, **gekennzeichnet durch** die Tatsache, dass bei Vorhandensein von Acetonitril die Reifungsstufe in der Größenordnung von einer Woche bei einer Temperatur in der Größenordnung von 55°C in geschlossener Atmosphäre dauert.

12. Verfahren gemäß Anspruch 1 bis 10, **gekennzeichnet durch** die Tatsache, dass bei Vorhandensein von Wasser die Stufe der Reifung in der Größenordnung von 72 Stunden bei Raumtemperatur dauert.

13. Verfahren gemäß Anspruch 1 bis 12, **gekennzeichnet durch** die Tatsache, dass die Alterungsstufe in der Größenordnung von einer Woche bei einer Temperatur in der Größenordnung von 55°C dauert.

14. Photochrom-Verbundmaterial, das nach dem Verfahren gemäß Anspruch 1 bis 13 realisiert wird, **dadurch gekennzeichnet, dass** das realisierte Xerogel die Form aufweist, die von der des Behälters bestimmt wird und den Ruthenium-Photochromkomplex mit ausgewähltem Nitrosylligangenden im kristallinen Zustand und in Form von Nanopartikeln umfasst, der in die Nanopartikel der Siliziummatrix eingefügt ist, die auf wenigstens homogene Weise verteilt sind.

15. Photochrom-Verbundmaterial gemäß Anspruch 14, **gekennzeichnet durch** die Tatsache, dass es die Form eines Monoliths oder die Form von Platten der gewünschten Dicke aufweist.

16. Photochrom-Verbundmaterial gemäß Anspruch 14 und 15, **gekennzeichnet durch** eine zwischen 2 und 15 nm inbegriffene durchschnittliche Größe der Nanoporen der Siliziummatrix.

17. Photochrom-Verbundmaterial gemäß Anspruch 14 bis 16, **gekennzeichnet durch** Nanokristalle des Photochromkomplexes, dessen zahlreichste Partikel zwischen 2 und 4 mm inbegriffen sind.

18. Medium mit qualitativ hochwertigem optischen Gedächtnis, insbesondere Kapazität, umfassend wenigstens ein Photochrom-Verbundmaterial gemäß Anspruch 14 bis 17, **gekennzeichnet durch** eine photoinduzierte Population, die der der Monokristalle des Photochromkomplexes nahe kommt.

19. Medium mit optischem Gedächtnis gemäß Anspruch 18, **gekennzeichnet durch** eine Umsetzungstemperatur, die der Raumtemperatur nahe kommt.

20. Medium mit optischem Gedächtnis gemäß Anspruch 18 und 19, **gekennzeichnet durch** eine komplette reversible Änderung der Farbe nach der Bestrahlung.

21. Medium mit optischem Gedächtnis gemäß Anspruch 18 bis 20, **gekennzeichnet durch** metastasefähig Zustände mit einer Lebensdauer von mehr als 9 Jahren.
